# EUROPEAN PATENT SPECIFICATION

(11) **EP 2 709 881 B1**
(45) Date of publication and mention of the grant of the patent: **14.02.2018**
(21) Application number: 12735948.7
(22) Date of filing: 18.05.2012
(51) Int. Cl.: B60S 3/04

(54) **SYSTEM FOR OBTAINING THE SHAPE OF MOTOR VEHICLES**
SYSTEM ZUM ERHALTEN DER FORM VON KRAFTFAHRZEUGEN
SYSTÈME PERMETTANT D'OBTENIR LA FORME DE VÉHICULES À MOTEUR

(30) Priority: 20.05.2011 IT AN20110063
(43) Date of publication of application: 26.03.2014
(73) Proprietor: O.M.G. di Geminiani Gino, 63087 Comunanza (AP) (IT)
(72) Inventor: GEMINIANI, Gino, I-63087 Comunanza AP (IT)
(74) Representative: Natali, Dario
(86) International application number: PCT/IT2012/000147
(87) International publication number: WO 2012/160582

(56) References cited:
- EP-A2- 1 795 409
- US-A1- 2008 250 585

## Description

The present invention relates to a system for obtaining the shape of motor vehicles which can be applied to automatic or semi-automatic car-washing apparatuses.

Since car-washing apparatuses tend to be increasingly used during the last years, there is a need for systems adapted for obtaining the shape of motor vehicles which can be applied to said car-washing apparatuses in order to obtain the shape of the motor vehicle to be washed in a quick and accurate manner.

In fact, given the large number of types of motor vehicles currently available to drivers, it is difficult to store all the shapes of the various types of motor vehicles available on the market and circulating through the streets in the processor, without forgetting the need to update said storage with the new types of motor vehicles which are periodically launched by the manufacturers of motor vehicles.

Currently, the state of the art provides systems for acquiring the shape of motor vehicles for car-washing apparatuses which can be applied to car-washing apparatuses adapted for controlling the washing means based on the shape previously obtained from the motor vehicle.

In document US2008200585 is described a method for controlling a vehicle washing installation with the use of a light-section procedure, wherein at least one treatment device and a vehicle to be washed are moved relative to each other in the washing direction, the vehicle surfaces are illuminated by two light fans starting from different positions, a first and a second two-dimensional depiction of the vehicle surfaces illuminated by the light fans are recorded from shooting angles which are oblique with respect to the planes of the light fans, and are stored in a control unit together with the relative position and/or relative movement of treatment devices and vehicle, the preceding steps are repeated during a traversing operation from one end to the other end of the vehicle, and, during or after the end of the traversing operation, a three-dimensional representation of the vehicle surfaces is calculated from the two-dimensional depictions stored in the control unit, and from the shooting angles, the relative position and/or relative movement and position data of the light fans, and said three-dimensional representation is used in order to control the vehicle washing installation, in particular the treatment devices arranged thereon.

In document EP1795409A2 is described a system having a portal, and a recording device for design characteristics of a vehicle. The recording device is formed as a scanning device for three dimensional scanning and detection of a vehicle surface area. The scanning device is stationary arranged above the vehicle at a cross cover of the portal. The portal is moveably arranged, and the scanning device is formed as a distance measuring device. An independent claim is also included for a handling method for a vehicle.

Thus, these systems can be poorly applied to and used with car-washing apparatuses which are already installed and working.

In addition, these acquisition systems have problems in recognizing and identifying the entire shape of the motor vehicle located inside the washing zone due to the glass surfaces of the motor vehicle.

Accordingly, an aim of the present invention is to provide a system for obtaining the external shape of motor vehicles which can be applied to automatic or semi-automatic car-washing apparatuses already installed or to be installed and which can be used under every ambient light condition as well as under every weather condition, said system comprising at least one sensor means, means for handling and processing data, and a central operating control unit.

A further aim of the present invention is to provide a system for obtaining the external shape of motor vehicles which can recognize and identify the entire shape of the motor vehicle, including the glass surfaces thereof, in order to reconstruct the shape of the motor vehicle.

An aim of the present invention is a method which allows the data obtained by the above-mentioned system to be optimally handled and processed.

Therefore, an object of the present invention is a system for obtaining the external shape of motor vehicles which can be applied to car-washing apparatuses already installed or to be installed, said system being able to reproduce the external shape of said motor vehicles and comprising means for detecting the outer shape of the motor vehicle, a central operating control unit, and software means for handling and processing data loaded on said central unit, wherein the means for detecting the outer shape of the motor vehicle comprise: a top sensor means taking a reading of the motor vehicle from the top thereof, said top sensor means being movable with respect to the longitudinal axis of said motor vehicle; and a side sensor means taking a reading of the motor vehicle from the side thereof, said side sensor being movable around the side surface of said motor vehicle, wherein said detection means comprise distance detection laser sensor means, wherein the laser beams emitted by each laser sensor means are impinged onto the surface of the motor vehicle and reflected by said surface; the distance of a given point of the motor vehicle, namely the point which caused the reflection of said laser beam, from the sensor means which emitted the laser beam is determined by calculating the time elapsing between the emission time of the laser beam and the reception time of the reflected pulse, characterized in that said sensor means can swing with respect to a given plane by an angle of about 190° to allow all the data of the shape of the motor vehicle to be obtained.

A further object of the invention is a method for obtaining, handling and processing data in an automatic or semi-automatic car-washing apparatus provided with movable washing means, wherein said data is obtained through a system which comprises: a top sensor means (2) taking a reading of the motor vehicle from the top thereof, said top sensor being movable with respect to the longitudinal axis of said motor vehicle; and a side sensor means (3) taking a reading of the motor vehicle from the side thereof, said side sensor being movable around the side surface of said motor vehicle, the method comprising the following operative steps:
a) receiving and handling all the data obtained by the sensor means while reading the shape of the motor vehicle;
b) once said motor vehicle has been three-dimensionally scanned, filtering the collected data in order to eliminate any false positive, namely those points which have been obtained but do not correspond to the shape of said motor vehicle;
c) once the data filtering step has been completed and the shape of the imaged motor vehicle has been obtained, processing the paths to be followed by the movable washing means during the washing step of the motor vehicle,
wherein the laser beams emitted by each laser sensor means are impinged onto the surface of the motor vehicle and reflected by said surface; the distance of a given point of the motor vehicle, namely the point which caused the reflection of said laser beam, from the sensor means which emitted the laser beam is determined by calculating the time elapsing between the emission time of the laser beam and the reception time of the reflected pulse, characterized in that said sensor means can swing with respect to a given plane by an angle of about 190° to allow all the data of the shape of the motor vehicle to be obtained.

These and other features of the invention, and the advantages derived therefrom, will become apparent from the following detailed description of a preferred embodiment thereof given by way of a non-limiting example with reference to the accompanying drawings, in which:
Fig. 1 is a side view of the motor vehicle located in the dedicated washing area inside the car-washing apparatus;
Fig. 2 is a top view of the motor vehicle located in the dedicated washing area inside the car-washing apparatus;
Fig. 3 is a front view of the motor vehicle located in the dedicated washing area inside the car-washing apparatus;
Fig. 4 is a view of the motor vehicle as scanned by the system for obtaining the external shape of motor vehicles according to the present invention;
Fig. 5 is a view of the motor vehicle as scanned when a filter for removing the points external to the shape has been applied;
Fig. 6 is a view of the motor vehicle as scanned when a filter for removing the points internal to the shape has been applied;
Fig. 7 is a side view of the shape of the motor vehicle with the paths followed by the movable washing means during the washing step.

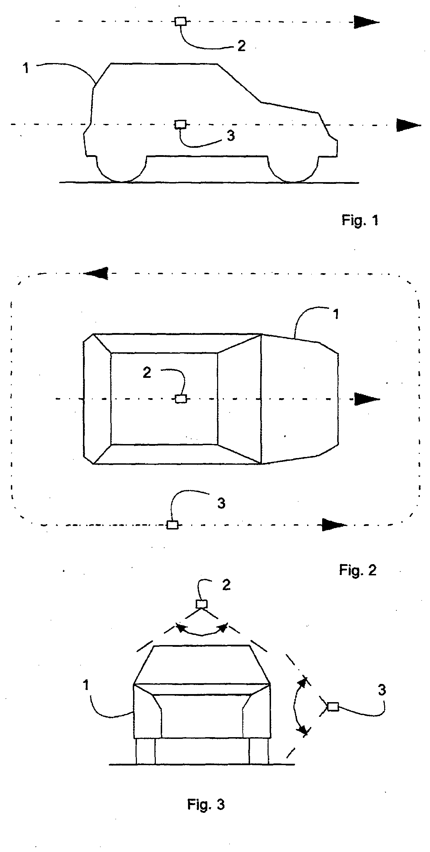

In Fig. 1 there is shown a side view of the motor vehicle 1 located in the dedicated washing area inside the car-washing apparatus.

As seen in the Figure, there are sensor means 2 and 3, where the top sensor means 2 takes a reading of the motor vehicle 1 from the top thereof and is moved along the direction indicated by the arrow, while the side sensor means 3 takes a reading of said motor vehicle from the side thereof and is also moved along the direction indicated by the arrow.

The top sensor means 2 and the side sensor means 3 are secured to the structure of the car-washing apparatus and mounted on guide means which allow said sensor means to be moved along the respective operative directions; particularly, the top sensor means 2 takes a reading of the motor vehicle 1 from the top thereof and is movable with respect to the longitudinal axis of said motor vehicle 1, while the side sensor means 3 takes a reading of the motor vehicle 1 from the side thereof and is movable around the side surface of said motor vehicle 1.

Said sensor means 2 and 3 substantially include laser beams.which are projected onto the motor vehicle 1; said laser beams are impinged onto and reflected by the surface of the motor vehicle 1, and the distance of a given point of the motor vehicle 1, namely the point which caused the reflection of said laser beam, from the sensor means which emitted the laser beam can be determined by calculating the time elapsing between the emission time of the laser beam and the reception time of the reflected pulse.

Fig. 2 is a top view of the motor vehicle located inside the car-washing apparatus.

Assuming that like elements are referred to by like reference numerals, from Fig. 2 it can be inferred that the top sensor means 2 is moved from the rear part to the front part of the motor vehicle 1, while the sensor means 3 is moved along the perimeter of said motor vehicle 1 in order to obtain points of said perimeter.

Fig. 3 is a front view of the motor vehicle located in the dedicated washing area inside the car-washing apparatus.

The Figure shows that the sensor means 2 and 3 are allowed to swing with respect to the lying plane thereof; said swinging movement covers an angle of 190°, thus allowing all the data of the motor vehicle 1 to be captured.

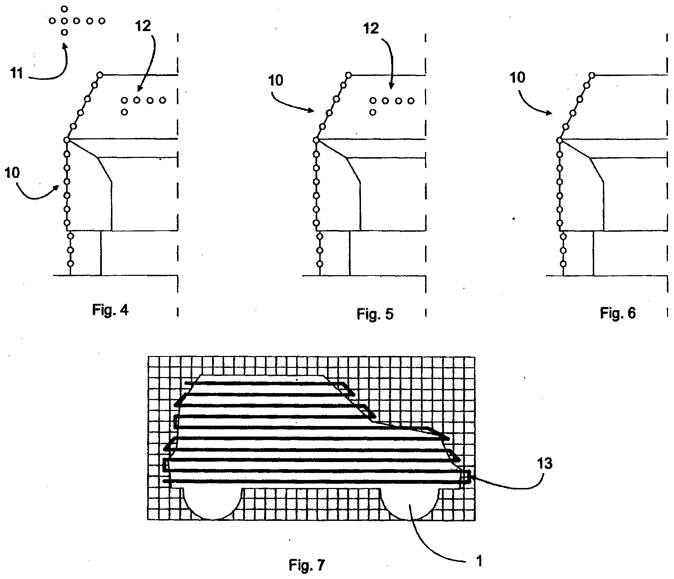

Fig. 4 is a view of the motor vehicle as scanned by the system for obtaining the external shape of motor vehicles according to the present invention.

As can be seen from Figure 4, not all the points so obtained correspond to the shape of the motor vehicle 1, due to the occurrence of false positives during the step of obtaining the data.

These false positives can be substantially divided into two categories: false positives 11 from points external to the motor vehicle 1, and false positives 12 from points internal to the motor vehicle 1.

False positives 11 are predominant in number and easy to be identified and eliminated during the data filtering step, while the false positives 12 correspond to the glass parts of the motor vehicle 1 which have a poor reflecting power with respect to the laser beam, which thus is passed through these glasses and reflected by the internal parts of the motor vehicle 1.

During the filtering step, the points which are separated from the sensor means by more than a certain distance are first discarded; this can eliminate the false positives 11 and some false positives 12 which are too far from said shape.

Fig. 5 is a view of the motor vehicle as scanned when a filter for removing the points external to the shape has been applied.

Once the false positives 11 has been eliminated, a mathematical filter is applied which allows the points identifying the correct shape of said motor vehicle 1 to be obtained.

This mathematical filter includes a data processing operation based on a mathematical function called "spline".

Said mathematical function comprises a set of polynomials connected to each other with the purpose of interpolating a set of points - called nodes of the spline - over a given range, in such a way that the function is continuous at each point of the range up to at least a given order of derivatives.

Said spline is substantially a numerical analysis tool used for interpolation, and it is obtained by dividing the range into more sub-ranges (Ik=[xk,xk+1] where k=1,..., N-1) and selecting a polynomial of degree n (usually a small degree) for each sub-range; thereafter, two successive polynomials are set to be smoothly fitted to each other, that is, in such a way that the first derivatives are continuous. The result of this operation is a shape corresponding to the effective shape of the motor vehicle 1 with an increased accuracy.

Fig. 6 is a view of the motor vehicle as scanned when a filter for removing the points internal to the shape has been applied.

As seen in the Figure, the final shape as defined by points 10 is obtained by applying certain data-selection criteria and filters to the resulting data in order to eliminate any false positives.

Fig. 7 is a side view of the shape of the motor vehicle with the paths followed by the movable washing means during the washing step.

Once the data filtering step has been completed and the shape of the motor vehicle as shown in Fig. 6 has been obtained, the path 13 to be followed by the movable washing means during the washing step of the motor vehicle 1 is determined.

In this calculation step, each surface of the motor vehicle 1 is divided into sectors equal in size and shape to each other, and a spline-based mathematical operation is performed on each sector to determine a central point for each sector.

The path 13 to be followed by the movable washing means can be established with the use of said central points.

Fig. 8 shows the block diagram identifying the operative algorithm of the software for handling and processing data according to the present invention.

The software receives and handles all the data obtained by the sensor means while reading the shape of the motor vehicle.

Once said motor vehicle has been three-dimensionally scanned, the software filters the collected data in order to eliminate any false positive, namely those points which have been obtained but do not correspond to the shape of said motor vehicle.

These false positives can be substantially divided into two categories: false positives from points external to the motor vehicle, and false positives from points internal to said motor vehicle.

False positives originating from points external to the motor vehicle are predominant in number and easy to be identified and eliminated during the data filtering step.

In fact, the software discards the points which are separated from the sensor means by more than a certain distance; this allows to eliminate the false positives 11 originating from points external to the motor vehicle.

False positives originating from points internal to the motor vehicle correspond to the glass parts of said motor vehicle 1 which have a poor reflecting power with respect to the laser beam, which thus is passed through said glasses and reflected by the internal parts of the motor vehicle 1.

Some of the false positives originating from points internal to the motor vehicle are discarded by the software since they are separated from the sensor means by more than a certain distance.

After this initial filtering step, the software uses a mathematical filter which can determine the points identifying the correct shape of said motor vehicle.

Said mathematical filter includes a data processing operation based on the mathematical function called "spline".

Said mathematical function comprises a set of polynomials connected to each other with the purpose of interpolating a set of points - called nodes of the spline - over a given range, in such a way that the function is continuous at each point of the range up to at least a given order of derivatives.

Once the false positives have been eliminated, the software proceeds with the processing of the data, which allows the shape of the motor vehicle and the paths to be followed by the movable washing means during the washing step to be determined.

Once the data filtering step has been completed and the shape of the imaged motor vehicle has been obtained, the software processes the paths to be followed by the washing means during the washing step of the motor vehicle.

In this calculation step, each surface of the motor vehicle is divided into sectors equal in size and shape to each other, and a spline-based mathematical operation is performed on each sector to determine a central point for each sector.

The path 13 to be followed by the washing means can be established with the use of said central points.

## Claims

1. System for obtaining the external shape of motor vehicles which can be applied to car-washing apparatuses already installed or to be installed, said system being able to reproduce the external shape of said motor vehicles and comprising means for detecting the outer shape of the motor vehicle, a central operating control unit, and software means for handling, processing data loaded on said central unit, and filtering such processed data, wherein the means for detecting the outer shape of the motor vehicles comprise: a top sensor means (2) to take a reading of the motor vehicle from the top thereof, said top sensor being movable with respect to the longitudinal axis of said motor vehicle; and a side sensor means (3) to take a reading of the motor vehicle from the side thereof, said side sensor being movable around the side surface of said motor vehicle, wherein said detection means comprise distance detection laser sensor means, wherein the laser beams emitted by each laser sensor means are impinged onto the surface of the motor vehicle and reflected by said surface; the distance of a given point of the motor vehicle, namely the point which caused the reflection of said laser beam, from the sensor means which emitted the laser beam is determined by calculating the time elapsing between the emission time of the laser beam and the reception time of the reflected pulse,
**characterized in that** said sensor means can swing with respect to a given plane by an angle of about 190° to allow all the data of the shape of the motor vehicle to be obtained.

2. System according to claim 1, wherein said detection means comprise distance detection laser sensor means and are slidably arranged on guide means which are attached to the support structure of the car-washing apparatus.

3. Method for obtaining, handling and processing data for obtaining the external shape of motor vehicles in an automatic or semi-automatic car-washing apparatus provided with movable washing means, wherein said data is obtained through a system which comprises: a top sensor means (2) taking a reading of the motor vehicle from the top thereof, said top sensor being movable with respect to the longitudinal axis of said motor vehicle; and a side sensor means (3) taking a reading of the motor vehicle from the side thereof, said side sensor being movable around the side surface of said motor vehicle, the method comprising the following operative steps:
a) receiving and handling all the data obtained by the sensor means while reading the shape of the motor vehicle;
b) once said motor vehicle has been three-dimensionally scanned, filtering the collected data in order to eliminate any false positive, namely those points which have been obtained but do not correspond to the shape of said motor vehicle;
c) once the data filtering step has been completed and the shape of the imaged motor vehicle has been obtained, processing the paths to be followed by the movable washing means during the washing step of the motor vehicle,
wherein the laser beams emitted by each laser sensor means are impinged onto the surface of the motor vehicle and reflected by said surface; the distance of a given point of the motor vehicle, namely the point which caused the reflection of said laser beam, from the sensor means which emitted the laser beam is determined by calculating the time elapsing between the emission time of the laser beam and the reception time of the reflected pulse,
**characterized in that** said sensor means can swing with respect to a given plane by an angle of about 190° to allow all the data of the shape of the motor vehicle to be obtained.

4. Method according to claim 3, wherein said false positives can be substantially divided into two categories: false positives from points external to the motor vehicle, and false positives from points internal to said motor vehicle.

5. Method according to claim 3 or claim 4, wherein the filtering step includes a first screening of false positives by eliminating the points which are separated from the sensor means by more than a certain distance.

6. Method according to claim 5, wherein a further filtering step is carried out with a mathematical filter adapted to determine the points which identify the correct shape of said motor vehicle.

7. Method according to claim 6, wherein said mathematical filter comprises a data processing operation based on the mathematical function called "spline"; said mathematical function being an interpolation having the purpose of interpolating a set of points - called nodes of the spline - over a given range in such a way that the interpolation function is continuous at each point of the range up to at least a given order of derivatives.

8. Method according to any one of the preceding claims 3 to 7, wherein, once the false positives have been eliminated, the data processing is carried out to allow the shape of the motor vehicle and the paths followed by the movable washing means during the washing step to be determined.

9. Method according to any one of the preceding claims 3 to 8, wherein the paths of the movable washing means are calculated by dividing each surface of the motor vehicle into sectors equal in size and shape to each other, and performing a spline-based mathematical operation on each sector to determine a central point for each sector.

10. Method according to claim 9, wherein the path to be followed by the movable washing means can be established with the use of said central points.

11. Computer program comprising computer program code means adapted to perform the steps of the method according to any of claims 3 to 10 when run on a computer.

## Patentansprüche

1. System zur Erfassung der äußeren Form von Motorfahrzeugen, das an Autowaschanlagen montiert werden kann, die bereits installiert sind oder installiert werden sollen, wobei das vorgenannte System in der Lage ist, die äußere Form der vorgenannten Motorfahrzeuge nachzubilden, und Vorrichtungen zur Erfassung der äußeren Form von Motorfahrzeugen, eine zentrale Steuereinheit, Software-Vorrichtungen für die Handhabung und Verarbeitung von Daten, die auf die vorgenannte zentrale Steuereinheit hochgeladen werden, sowie zum Filtern dieser verarbeiteten Daten umfasst, wobei die Vorrichtung zur Erfassung der äußeren Form der Motorfahrzeuge das Folgende umfasst: eine obere Sensorvorrichtung (2), um das Motorfahrzeug von dessen Oberseite aus zu analysieren, wobei der obere Sensor entlang der Längsachse des vorgenannten Motorfahrzeugs beweglich ist; und eine seitliche Sensorvorrichtung (3), um das Motorfahrzeug von dessen Seite aus zu analysieren, wobei der seitliche Sensor um die seitliche Oberfläche des vorgenannten Motorfahrzeugs herum beweglich ist, wobei die vorgenannten Erfassungsvorrichtungen eine Abstandserkennungslaservorrichtung umfassen, bei der die von jeder einzelnen Lasersensorvorrichtung emittierten Laserstrahlen auf die Oberfläche des Motorfahrzeugs geworfen und von der vorgenannten Oberfläche reflektiert werden; der Abstand eines bestimmten Punktes des Motorfahrzeugs, und zwar der Punkt, der die Reflektion des vorgenannten Laserstrahls aus der Sensorvorrichtung verursacht, die den Laserstrahl emittiert hat, wird durch die Berechnung der Zeit ermittelt, die zwischen dem Emittierungszeitpunkt des Laserstrahls und dem Empfangszeitpunkt des reflektierten Pulses verstreicht, **gekennzeichnet dadurch, dass** die vorgenannte Sensorvorrichtung entlang einer bestimmten Ebene in einem Winkel von 190° schwenken kann, um die Erfassung aller Daten von der Oberfläche des Motorfahrzeugs zu ermöglichen.

2. System gemäß Patentanspruch 1, bei dem die vorgenannten Erfassungsvorrichtungen Abstandserfassungslasersensorvorrichtungen umfassen und verschiebbar auf Führungsvorrichtungen angeordnet sind, die an der Tragstruktur der Autowaschanlage befestigt sind.

3. Methode zur Erfassung, Handhabung und Verarbeitung von Daten zur Erfassung der äußeren Form von Motorfahrzeugen in einer automatischen oder halbautomatischen Autowaschanlage, die bewegliche Waschvorrichtungen aufweist, wobei die vorgenannten Daten durch ein System erfasst werden, das Folgendes umfasst: eine obere Sensorvorrichtung (2), die das Motorfahrzeug von dessen Oberseite aus analysiert, wobei der vorgenannte obere Sensor entlang der Längsachse des vorgenannten Motorfahrzeugs beweglich ist; und eine seitliche Sensorvorrichtung (3), die das Motorfahrzeug von dessen Seite aus analysiert, wobei der seitliche Sensor um die seitliche Oberfläche des vorgenannten Motorfahrzeugs herum beweglich ist und die Methode die folgenden Arbeitsschritte umfasst:
a) Empfang und Handhabung aller durch die Sensorvorrichtung erfassten Daten, während die Form des Motorfahrzeugs analysiert wird;
b) Das Filtern der gesammelten Daten, um falsche Positiv-Meldungen nach dem dreidimensionalen Abtasten des vorgenannten Motorfahrzeugs zu entfernen, und zwar jene Punkte, die erfasst wurden, jedoch nicht der Form des vorgenannten Motorfahrzeugs entsprechen;
c) Die Verarbeitung der durch die bewegliche Waschvorrichtung während des Waschschritts des Motorfahrzeugs zu beachtenden Pfade, nachdem der Datenfilterungsschritt abgeschlossen und die Form des abgebildeten Motorfahrzeugs erfasst worden ist, wobei die von jeder einzelnen Lasersensorvorrichtung emittierten Laserstrahlen auf die Oberfläche des Motorfahrzeugs geworfen werden und von der vorgenannten Oberfläche reflektiert werden; der Abstand eines bestimmten Punktes des Motorfahrzeugs, und zwar der Punkt, der die Reflektion des vorgenannten Laserstrahls aus der Sensorvorrichtung verursacht, die den Laserstrahl emittiert hat, wird durch die Berechnung der Zeit ermittelt, die zwischen dem Emittierungszeitpunkt des Laserstrahls und dem Empfangszeitpunkt des reflektierten Pulses verstreicht, **dadurch gekennzeichnet, dass** die vorgenannte Sensorvorrichtung entlang einer bestimmten Ebene in einem Winkel von 190° schwenken kann, um die Erfassung aller Daten von der Oberfläche des Motorfahrzeugs zu ermöglichen.

4. Methode gemäß Patentanspruch 3, bei der die vorgenannten falschen Positiv-Meldungen im Wesentlichen in zwei Kategorien unterteilt werden können: falsche Positiv-Meldungen von Punkten, die außerhalb des Motorfahrzeugs liegen, und falsche Positiv-Meldungen von Punkten, die innerhalb des vorgenannten Motorfahrzeugs liegen.

5. Methode gemäß Patentanspruch 3 oder Patentanspruch 4, deren Filterungsschritt eine erste Prüfung falscher Positiv-Meldungen einschließt, indem die Punkte entfernt werden, die von der Sensorvorrichtung weiter entfernt als ein bestimmter Abstand liegen.

6. Methode gemäß Patentanspruch 5, bei der ein weiterer Filterungsschritt mithilfe eines mathematischen Filters erfolgt, der so ausgerichtet ist, dass er die Punkte erfasst, die die korrekte Form des vorgenannten Motorfahrzeugs identifizieren.

7. Methode gemäß Patentanspruch 6, bei der der vorgenannte mathematische Filter einen Datenverarbeitungsvorgang basierend auf der so genannten mathematischen Funktion "Spline" umfasst; die vorgenannte mathematische Funktion ist eine Interpolation mit dem Zweck, eine Reihe von Punkten, die als Knotenpunkte des Splines bezeichnet werden, über einen bestimmten Bereich hinweg so zu interpolieren, dass die Interpolationsfunktion an jedem Punkt des Bereichs mindestens bis zu einer bestimmten Reihenfolge von Ableitungen kontinuierlich ist.

8. Methode gemäß jedem der vorangegangenen Patentansprüche 3 bis 7, bei der die Datenverarbeitung erfolgt, nachdem die falschen Positiv-Meldungen entfernt worden sind, um die Form des Motorfahrzeugs und die von der beweglichen Waschvorrichtung während des Waschschritts beachteten Pfade zu ermitteln.

9. Methode gemäß jedem der vorangegangenen Patentansprüche 3 bis 8, bei der die Pfade der beweglichen Waschvorrichtung berechnet werden, indem jede Oberfläche des Motorfahrzeugs in gleichgroße und gleichgeformte Sektoren aufgeteilt wird und eine auf Splines basierte mathematische Operation für jeden Sektor durchgeführt wird, um den zentralen Punkt jedes Sektors zu ermitteln.

10. Methode gemäß Patentanspruch 9, bei der der von der beweglichen Waschvorrichtung zu beachtende Pfad durch den Einsatz der vorgenannten zentralen Punkte bestimmt werden kann.

11. Computerprogramm, das eine Computerprogrammierungscodevorrichtung umfasst und so eingerichtet ist, dass es die Schritte der Methode gemäß jedem der Patentansprüche 3 bis 10 ausführt, wenn es auf einem Computer läuft.

## Revendications

1. Système pour obtenir la forme extérieure de véhicules à moteur, qui peut être appliqué à des appareils de lavage de voitures déjà installés ou à installer, ledit système pouvant reproduire la forme extérieure desdits véhicules à moteur et comprenant des moyens pour détecter la forme extérieure du véhicule à moteur, une unité de commande de fonctionnement centrale et des moyens logiciels pour gérer et traiter les données chargées sur ladite unité centrale et filtrer ces données traitées, où les moyens pour détecter la forme extérieure des véhicules à moteur comprennent : un moyen de détection supérieur (2) pour effectuer
une lecture du véhicule à moteur à partir de son sommet, ledit capteur supérieur se déplaçant par rapport à l'axe longitudinal dudit véhicule à moteur ; et un moyen de détection latéral (3) pour effectuer une lecture du véhicule à moteur à partir de son côté, ledit capteur latéral se déplaçant autour de la surface latérale dudit véhicule à moteur, où lesdits moyens de détection comprennent un moyen de détection laser de distance, où les faisceaux laser émis par chaque moyen de détection laser sont appliqués à la surface du véhicule à moteur et réfléchis par ladite surface ; la distance d'un point donné du véhicule à moteur, à savoir le point ayant causé la réflexion dudit faisceau laser, à partir du moyen de détection ayant émis le faisceau laser, est déterminée en calculant le temps écoulé entre le temps d'émission du faisceau laser et le temps de réception de l'impulsion réfléchie,
**caractérisé par le fait que** lesdits moyens de détection peuvent pivoter par rapport à un plan donné d'un angle d'environ 190° pour pouvoir obtenir toutes les données de la forme du véhicule à moteur.

2. Système selon la revendication 1, où lesdits moyens de détection comprennent des moyens de détection laser de distance et sont disposés de manière coulissante sur des moyens de guidage fixés à la structure de support de l'appareil de lavage de voitures.

3. Méthode pour obtenir, gérer et traiter les données pour obtenir la forme extérieure des véhicules à moteur dans un appareil de lavage automatique ou semi-automatique de voitures équipé de dispositifs de lavage mobiles, où lesdites données sont obtenues par l'intermédiaire d'un système comprenant : un moyen de détection supérieur (2) effectuant une lecture du véhicule à moteur à partir de son sommet, ledit capteur supérieur se déplaçant par rapport à l'axe longitudinal dudit véhicule à moteur ; et un moyen de détection latéral (3) effectuant une lecture du véhicule à moteur à partir de son côté, ledit capteur latéral se déplaçant autour de la surface latérale dudit véhicule à moteur, la méthode comprenant les étapes suivantes :
a) réception et gestion de toutes les données obtenues par les moyens de détection au cours de la lecture de la forme du véhicule à moteur ;
b) une fois que ledit véhicule à moteur a été scanné en trois dimensions, filtrage des données collectées afin d'éliminer tout faux positif, à savoir les points qui ont été obtenus mais qui ne correspondent pas à la forme dudit véhicule à moteur ;
c) une fois que l'étape de filtrage des données est achevée et que la forme reproduite du véhicule à moteur a été obtenue, traitement des trajectoires que les moyens de lavage mobiles devront suivre pendant l'étape de lavage du véhicule à moteur,
où les faisceaux laser émis par chaque moyen de détection laser sont appliqués à la surface du véhicule à moteur et réfléchis par ladite surface ; la distance d'un point donné du véhicule à moteur, à savoir le point ayant causé la réflexion dudit faisceau laser, à partir du moyen de détection ayant émis le faisceau laser, est déterminée en calculant le temps écoulé entre le temps d'émission du faisceau laser et le temps de réception de l'impulsion réfléchie,
**caractérisé par le fait que** lesdits moyens de détection peuvent pivoter par rapport à un plan donné d'un angle d'environ 190° pour pouvoir obtenir toutes les données de la forme du véhicule à moteur.

4. Méthode selon la revendication 3, où lesdits faux positifs peuvent être essentiellement divisés en deux catégories : les faux positifs des points extérieurs jusqu'au véhicule à moteur et les faux positifs des points intérieurs jusqu'audit véhicule à moteur.

5. Méthode selon la revendication 3 ou 4, où
l'étape de filtrage comprend un premier contrôle des faux positifs en éliminant les points qui se trouvent au-delà d'une certaine distance par rapport aux moyens de détection.

6. Méthode selon la revendication 5, où une étape de filtrage supplémentaire est effectuée avec un filtre mathématique conçu pour déterminer les points qui identifient la forme correcte dudit véhicule à moteur.

7. Méthode selon la revendication 6, où ledit filtre mathématique comprend une opération de traitement de données reposant sur la fonction mathématique appelée « spline » ; ladite fonction mathématique étant une interpolation ayant pour but d'interpoler un ensemble de points - appelés noeuds de la spline - sur une gamme donnée de telle sorte que la fonction d'interpolation est continue à chaque point de la gamme jusqu'à au moins un ordre donné de dérivées.

8. Méthode selon l'une quelconque des revendications précédentes 3 à 7, où, une fois que les faux positifs ont été éliminés, le traitement des données est effectué pour pouvoir déterminer la forme du véhicule à moteur et les trajectoires que les moyens de lavage mobiles doivent suivre pendant l'étape de lavage.

9. Méthode selon l'une quelconque des revendications précédentes 3 à 8, où les trajectoires des moyens de lavage mobiles sont calculées en divisant chaque surface du véhicule à moteur en secteurs de taille et de forme égales entre eux, et en effectuant sur chaque secteur une opération mathématique basée sur le principe de la spline pour déterminer un point central pour chaque secteur.

10. Méthode selon la revendication 9, où la trajectoire que les moyens de lavage mobiles doivent suivre peut être établie à l'aide desdits points centraux.

11. Programme informatique comprenant des moyens de code de programme informatique conçus pour exécuter les étapes de la méthode selon l'une quelconque des revendications 3 à 10 sur un ordinateur.
